**Europäisches Patentamt**

**European Patent Office**

**Office européen des brevets**

(19)

(11) Veröffentlichungsnummer : **0 283 465 B1**

# EUROPÄISCHE PATENTSCHRIFT

(12)

(45) Veröffentlichungstag der Patentschrift :
22.07.92 Patentblatt 92/30

(51) Int. Cl.$^5$ : **B60G 11/10**

(21) Anmeldenummer : **88890046.1**

(22) Anmeldetag : **09.03.88**

(54) **Insbesondere zur Mitteneinspannung geeignete Einspannvorrichtung für eine Blattfeder aus faserverstärktem Kunststoff, sowie Blattfeder mit dieser Einspannvorrichtung.**

(30) Priorität : **16.03.87 AT 622/87**

(43) Veröffentlichungstag der Anmeldung :
**21.09.88 Patentblatt 88/38**

(45) Bekanntmachung des Hinweises auf die Patenterteilung :
**22.07.92 Patentblatt 92/30**

(84) Benannte Vertragsstaaten :
**AT BE CH DE ES FR GB GR IT LI NL SE**

(56) Entgegenhaltungen :
**EP-A- 0 130 688**
**EP-A- 0 213 110**
**EP-A- 0 214 388**
**FR-A- 2 008 264**
**FR-A- 2 088 906**
**FR-A- 2 180 955**
**GB-A- 2 128 714**

(73) Patentinhaber : **HOESCH-ISOCAR**
**Faserverstärkte Federn Gesellschaft m.b.H.**
**Industriestrasse 2**
**A-7000 Eisenstadt (AT)**

(72) Erfinder : **Huber, Christian**
**Bahnstrasse 43**
**A-7000 Eisenstadt (AT)**
Erfinder : **Hattinger, Ruprecht**
**Sommerergasse 11**
**A-1130 Wien (AT)**

(74) Vertreter : **Stampfer, Heinz**
**ISOVOLTA Österreichische Isolierstoffwerke**
**AG Industriezentrum NÖ-Süd**
**A-2351 Wiener Neudorf (AT)**

## Beschreibung

Die Erfindung betrifft eine Einspannvorrichtung für eine Blattfeder aus faserverstärktem Kunststoff, die im Einspannbereich zueinander planparallele Federblattober- und unterseiten aufweist, mit zwei Spannelementen zwischen welchen die Blattfeder eingespannt ist, wobei zwischen der Blattfeder und den beiden Spannelementen jeweils elastische Zwischenlagen angeordnet sind, die im wesentlichen die ganze Breite der Blattfeder einnehmen. Die Erfindung betrifft ferner eine Blattfeder aus fasrverstärktem Kunststoff mit dieser Einspannvorrichtung.

Bei einer Blattfeder dieser Art, die aus der EP-A1-0130688 bekannt ist, bestehen die Zwischenlagen aus einem elastischen Material wie Polyurethankautschuk. Die Anordnung dieser Zwischenlagen hat u.a. den Zweck, die von den Spannelementen bei der Belastung in die Blattfeder eingeleiteten Kräfte besser zu verteilen. Eine ungünstige Krafteinleitung von den Spannelementen in die Blattfeder hätte nämlich zur Folge, daß Spannungsspitzen, die z.B. durch eine ungleichförmige Verteilung des Einspanndruckes wegen Unregelmäßigkeiten an den Spannelementen oder durch unsymmetrische Belastungen der Feder im Betrieb auftreten und die bei Stahlblattfedern nicht schaden würden, bei Kunststoff-Blattfedern zu Beschädigungen der BlattfederOberfläche und damit zu einem frühzeitigen Versagen der Feder führen. Die Anmelderin hat nun gefunden, daß solche Kautschuk-Zwischenlagen zwar das Problem der Krafteinleitung bis zu einem gewissen Maße lösen, daß aber wegen der Neigung des Kautschukmaterials, unter Druck zu kriechen, z.B. nach längeren Wechselbelastungstests der Einspanndruck in ungewünschter Weise abnimmt. Dadurch werden die Einspannbedingungen verschlechtert, was u.a. zu einer Verringerung der Blattfederlebensdauer führen kann.

Hier will die Erfindung Abhilfe schaffen. Die Erfindung löst die Aufgabe, eine Einspannvorrichtung der eingangs der Beschreibung genannten Art anzugeben, bei der eine Verringerung der Lebensdauer aufgrund einer Veränderung der optimalen Einspannbedingungen vermieden wird.

Die der Erfindung zugrunde liegende Aufgabe wird in der erfindungsgemäßen Einspannvorrichtung gelöst, die dadurch gekennzeichnet ist, daß die elastischen Zwischenlagen aus vergütetem Federstahl bestehen und über den Bereich, der den Einspanndruck der Spannelemente überträgt, in Federlängsrichtung mit jeweils einer Länge 1 von mindestens 10 mm, vorteilhaft jedoch von mindestens 15 mm, überstehen.

Die Ansprüche 2 - 6 betreffen vorteilhafte Ausgestaltungen der erfindungsgemäßen Einspannvorrichtung.

Aus der GB-A-2128714 ist zwar bekannt, bei einer Einspannvorrichtung für eine Mehrfachblattfeder anschließend an die Spannfläche der das obere Einspannelement bildenden Bridenplatte eine dünne zusätzliche Zwischenlage aus Federstahl vorzusehen, die die eigentliche aus Polyurethankautschuk bestehende Zwischenlage hinterfüttert. Bei der in dieser GB-A 2128714 beschriebenen Einspannvorrichtung bestehen wegen der ungenügenden Formstabilität der Kautschukzwischenlagen unter Druck aber ähnliche Probleme wie bei der aus der EP-A1-0130688 bekannten Einspannvorrichtung.

Die Erfindung wird nachstehend anhand der Figuren näher erläutert. Dabei zeigen
– Fig. 1 den Einspannbereich für die Mitteneinspannung einer Blattfeder schematisch im Aufriß; und
– Fig. 2 einen Querschnitt dieses Einspannbereiches gemäß der Linie II-II in Fig. 1.

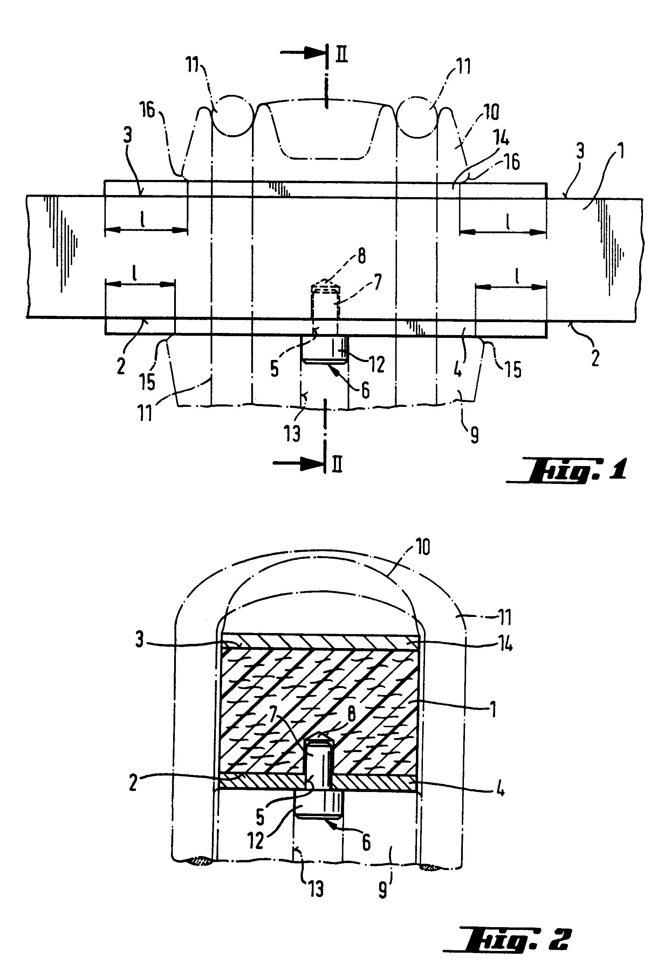

Eine Blattfeder 1 aus glasfaserverstärktem Epoxydharz weist einen Einspannbereich für die Mitteneinspannung auf, in welchem die Federunter- und -oberseite 2, 3 zueinander planparallel ausgebildet sind. Die Blattfeder selbst ist dabei eine sogenannte Parabelfeder, die leicht gekrümmt ist und die sich gegen die mit Federaugen versehenen Federenden hin verjüngt. Bei dem vorliegenden Beispiel hat die Blattfeder folgende Abmessungen bzw. Kennwerte

Federaugenabstand 1.543 mm
Federblattbreite 60 mm
Federblattdicke (Mitte) 37 mm
Federrate 75 N/mm
max. Last 18.000 N

An der unteren, der druckseitigen Federunterseite 2 liegt eine Zwischenlage 4 aus vergütetem Federstahl an, die mit einem zentralen Loch 5 versehen ist, in das mit einem Paßsitz ein Herzbolzen 6 aufgenommen ist, der mit seinem Ende 7 in einem in der Blattfeder 1 angebrachten Sackloch 8 eingeklebt ist.

Die Blattfeder ist nun soweit vorbereitet, daß sich mit einer auch für Stahlblattfedern üblichen Mitteneinspannung versehen werden kann. Eine solche Mitteneinspannung besteht im wesentlichen aus einem Achssattel 9, einer Bridenplatte 10 sowie zwei Federbriden 11, deren Konturen in den Figuren nur strichliert dargestellt sind. Bei der Montage der Blattfeder 1 in der Einspannvorrichtung wird der Kopf 12 des Herzbolzens 6 in einer Bohrung 13 im Achssattel 9 aufgenommen. Eine zweite Zwischenlage 14 aus vergütetem Federstahl, welche dieselbe Qualität und dieselben Abmessungen wie die erste Zwischenlage 4 jedoch kein zentrales Loch aufweise, wird zwischen der Federoberseite 3 und der Bridenplatte 10 eingefügt und zwischen den vom Achssattel 9 und der Bridenplatte 10 gebildeten Spannelementen durch Anziehen der Bridenmuttern eingeklemmt.

2

Für die Zwischenlagen gilt, daß ihre Dicken bei der gegebenen Härte des Zwischenlagenmaterials genügend groß sein müssen, um die Spannungsspitzen, die infolge des für die eine bleibende Festigkeit der Montage erforderlichen Einspanndruckes in der Nähe der Ränder der Spannelemente in der Blattfeder auftreten, in ausreichendem Maße zu reduzieren und die Länge 1, mit der die Zwischenlagen über die Ränder der Spannelemente hinausragen, genügend groß zu machen, daß die bei einer Verformung der Blattfeder durch die gleichzeitige elastische Verformung der überstehenden Bereiche der Zwischenlagen auftretenden Reaktionskräfte an den Enden der Zwischenlagen 4, 14 genügend klein bleiben, um die Blattfederoberfläche dort nicht zu beschädigen.

An der montierten Mitteneinspannung gemäß dem beschriebenen Beispiel reicht die Federstahl-Zwischenlage 4 mit ihren Enden mit einer Länge 1 von jeweils 20 mm über die Ränder 15 des Achssattels 9 hinaus, während die Zwischenlage 14 mit ihren Enden um jeweils 10 mm über die Bridenplatten-Ränder 16 übersteht.

Bei der konkreten Blattfeder mit den oben angegebenen Abmessungen sind die Zwischenlagen 4, 14 aus einem Federstahl von 5 mm Dicke der Qualität 50 CrV4 hergestellt. Die fertig bearbeiteten Zwischenlagen wurden danach auf 46 bis 49 HRC (Rockwell-Härte) vergütet und durch Kugelstrahlen oberflächenverdichtet.

Gemäß einer vorteilhaften Variante der erfindungsgemäßen Einspannvorrichtung besteht zumindest die druckseitige Zwischenlage statt aus einem einstückigen Federstahlblech aus mehreren, als Paket übereinander angeordneten vergüteten Federstahlblechen. Dies hat u.a. den Vorteil, daß zur Erzielung desselben Effektes bei gleichbleibender Zwischenlagendicke die überstehenden Bereiche der Zwischenlage kürzer ausgebildet sein können und die bei Federbelastung im Federstahlmaterial der Zwischenlage auftretenden maximalen Spannungen geringer sind als bei der Variante mit einer einstückigen Zwischenlage.

## Patentansprüche

1. Einspannvorrichtung für eine Blattfeder (1) aus faserverstärktem Kunststoff, die im Einspannbereich zueinander planparallele Federblattober- und unterseiten (2, 3) aufweist, mit zwei Spannelementen (9, 10) zwischen welchen die Blattfeder (1) eingespannt ist, wobei zwischen der Blattfeder (1) und den beiden Spannelementen (9, 10) jeweils elastische Zwischenlagen angeordnet sind, die im wesentlichen die ganze Breite der Blattfeder einnehmen und über den Bereich, der den Einspanndruck der Spannelemente (9, 10) überträgt, überstehen, dadurch gekennzeichnet, daß die elastischen Zwischenlagen (4, 14) aus vergütetem Federstahl bestehen und die spannelemente in Federlängsrichtung um jeweils eine Länge (1) von mindestens 10 mm überragen.

2. Einspannvorrichtung nach Anspruch 1, dadurch gekennzeichnet, daß das Verhältnis der überstehenden Länge 1 der Federstahl-Zwischenlage (4, 14) zur Zwischenlagendicke größer als 2,5 ist.

3. Einspannvorrichtung nach Anspruch 1 oder 2, dadurch gekennzeichnet, daß zumindest die druckseitige Zwischenlage (4) aus mehreren als Paket übereinander angeordneten vergüteten Federstahlblechen besteht.

4. Einspannvorrichtung nach einem der Ansprüche 1 bis 3, dadurch gekennzeichnet, daß die druckseitige Zwischenlage (4) mittels eines Herzbolzens (6) mit der Blattfeder (1) verbunden ist.

5. Einspannvorrichtung nach Anspruch 4, dadurch gekennzeichnet, daß der Herzbolzen (6) in einem in der Blattfeder (1) angebrachten Sackloch (8) befestigt ist.

6. Blattfeder (1) aus faserverstärktem Kunststoff, dadurch gekennzeichnet, daß sie mit einem Einspannvorrichtung nach einem der Ansprüche 1 bis 5 versehen oder für das Einspannen mit dieser Einspannvorrichtung angepaßt ist.

## Claims

1. A clamping device for a leaf spring (1) of fibre-reinforced plastic which has in the clamping region upper and lower leaf spring sides (2, 3) which are plane-parallel to one another, with two clamping elements (9, 10) between which the leaf spring (1) is clamped, with elastic intermediate layers being arranged between the leaf spring (1) and the two clamping elements (9, 10) in each case, which layers substantially occupy the entire width of the leaf spring and project beyond the region which transmits the clamping pressure of the clamping elements (9, 10), characterised in that the elastic intermediate layers (4, 14) are made of heat-treated spring steel and project beyond the clamping elements in the longitudinal direction of the spring by a length (1) of at least 10 mm in each case.

2. A clamping device according to Claim 1, characterised in that the ratio of the projecting length 1 of the spring steel intermediate layer (4, 14) to the thickness of the intermediate layer is more than 2.5.

3. A clamping device according to Claim 1 or 2, characterised in that at least the pressure-side intermediate

EP 0 283 465 B1

layer (4) consists of a plurality of heat-treated spring steel sheets arranged one above the other as a stack.

4. A clamping device according to one of Claims 1 to 3, characterised in that the pressure-side intermediate layer (4) is joined to the leaf spring (1) by means of a centering bolt (6).

5. A clamping device according to Claim 4, characterised in that the centering bolt (6) is secured in a blind hole (8) made in the leaf spring (1).

6. A leaf spring (1) of fibre-reinforced plastic, characterised in that it is provided with a clamping device according to one of Claims 1 to 5 or is adapted for clamping with said clamping device.


**Revendications**

1. Dispositif de fixation par serrage pour un ressort à lame (1) en matière plastique renforcée par des fibres, qui comporte dans la zone de fixation par serrage des faces des lames de ressort supérieure et inférieure (2, 3) planes et parallèles l'une à l'autre et deux éléments de serrage (9, 10) entre lesquels est serré le ressort à lames (1), dans lequel sont disposés, entre le ressort à lames (1) et chacun des deux éléments de serrage (9, 10), des couches intermédiaires élastiques qui recouvrent sensiblement toute la largeur du ressort à lames et dépassent de la zone qui supporte la pression de serrage des éléments de serrage (9, 10), caractérisé en ce que les couches intermédiaires élastiques (4, 14) sont réalisées en acier à ressort traité et dépassent chacune les éléments de serrage, dans la direction longitudinale du ressort, d'une longueur (1) d'au moins 10 mm.

2. Dispositif de fixation par serrage selon la revendication 1, caractérisé en ce que le rapport entre la longueur de dépassement (1) de la couche intermédiaire en acier à ressort (4, 14) et l'épaisseur de la couche intermédiaire est supérieur à 2,5.

3. Dispositif de fixation par serrage selon la revendication 1 ou 2, caractérisé en ce qu'au moins la couche intermédiaire (4) du côté pressé se compose de plusieurs tôles en acier à ressort traité, superposées en un paquet.

4. Dispositif de fixation par serrage selon l'une des revendications 1 à 3, caractérisé en ce que la couche intermédiaire (4) du côté pressé est reliée au ressort à lames (1) à l'aide d'un boulon (6) pénétrant à coeur.

5. Dispositif de fixation par serrage selon la revendication 4, caractérisé en ce que le boulon (6) pénétrant à coeur est fixé dans un trou borgne (8) ménagé dans le ressort à lames (1).

6. Ressort à lames (1) en matière plastique renforcée par des fibres, caractérisé en ce qu'il est muni d'un dispositif de fixation par serrage selon l'une des revendications 1 à 5 ou bien est prévu pour être serré par ce dispositif de fixation par serrage.

4

Fig. 1

Fig. 2